(19) Europäisches Patentamt / European Patent Office / Office européen des brevets

(11) **EP 2 167 329 B1**

(12) **FASCICULE DE BREVET EUROPEEN**

(45) Date de publication et mention
de la délivrance du brevet:
**12.12.2012 Bulletin 2012/50**

(21) Numéro de dépôt: **08774151.8**

(22) Date de dépôt: **19.06.2008**

(51) Int Cl.:
***B60C 5/14*** (2006.01)

(86) Numéro de dépôt international:
**PCT/EP2008/057795**

(87) Numéro de publication internationale:
**WO 2009/000742 (31.12.2008 Gazette 2009/01)**

(54) **PNEUMATIQUE AVEC UNE COUCHE AUTO-OBTURANTE**

REIFEN MIT SELBSTVERSCHLIESSENDER SCHICHT

TYRE WITH SELF-CLOSING LAYER

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **28.06.2007 FR 0704638**

(43) Date de publication de la demande:
**31.03.2010 Bulletin 2010/13**

(73) Titulaires:
• **COMPAGNIE GENERALE DES ETABLISSEMENTS MICHELIN**
**63000 Clermont-Ferrand (FR)**
• **MICHELIN Recherche et Technique S.A.**
**1763 Granges-Paccot (CH)**

(72) Inventeurs:
• **MERINO LOPEZ, Jose**
**63200 Riom (FR)**

• **AHOUANTO, Michel**
**63530 Enval (FR)**
• **LESAGE, Pierre**
**63000 Clermont-Ferrand (FR)**
• **PIALOT, Frédéric**
**63190 Moissat (FR)**

(74) Mandataire: **Dequire, Philippe Jean-Marie Denis**
**Manufacture Française des Pneumatiques, Michelin,**
**23, place des Carmes-Déchaux,**
**SGD/LG/PI - F35- Ladoux**
**63040 Clermont-Ferrand Cedex 09 (FR)**

(56) Documents cités:
**EP-A- 0 102 844     EP-A- 1 034 948**
**EP-A- 1 798 257     WO-A-99/62998**
**US-A- 4 426 468**

## Description

### Domaine de l'invention

La présente invention concerne un pneumatique tubeless comportant une couche auto-obturante (« *self sealing* ») disposée sur sa paroi intérieure pour obturer d'éventuelles perforations en service.

### Arrière-plan technologique

Le problème des crevaisons, à savoir comment permettre à un véhicule de poursuivre sa route malgré une perte importante ou totale de pression d'un ou plusieurs de ses pneumatiques ou comment éviter une fuite d'air à la suite d'une perforation date du début même de l'utilisation des roues chaussées de pneumatiques gonflés.

Une solution très souvent proposée est d'ajouter sur la paroi intérieure du pneumatique une couche auto-obturante.

Pour pouvoir être utilisable, une telle couche auto-obturante doit satisfaire à de nombreuses conditions de nature physique et chimique. Elle doit notamment être efficace dans une très large gamme de températures d'utilisation et ce pendant toute la durée de vie des pneumatiques. Elle doit être capable d'obturer des perforations ou trous lorsque l'objet perforant que nous appelons « clou » responsable reste en place. A l'expulsion du clou, la couche auto-obturante doit pouvoir combler le trou. Il est préférable que le matériau de la couche auto-obturante ne traverse pas complètement la paroi du pneumatique pour former une saillie ou « bouchon » à l'extérieur. Ces bouchons sont efficaces pour éviter les fuites mais si pour une raison quelconque ils sont coupés, la fuite peut ne plus être obturée.

Le document US 4,426,468 présente des couches auto-obturantes pour pneumatique à base de caoutchouc butyl de haute masse moléculaire, réticulé et dont la formulation est ajustée pour respecter des valeurs données pour les caractéristiques de contrainte rupture, allongement rupture et densité de réticulation et ainsi, notamment, éviter que le matériau de la couche auto-obturante ne traverse la paroi du pneumatique dans le trou laissé après l'expulsion du clou.

Le document EP 1 090 069 B1 divulgue une composition auto-obturante avec 100 parties en masse d'un élastomère thermoplastique à base de styrène, 110 à 190 parties en masse d'un agent adhésif, 80 à 140 parties en masse d'un plastifiant liquide et 2 à 20 parties en masse d'un additif. Ce document ne donne aucun élément à propos des caractéristiques physiques des compositions.

Le document WO-A-99/62998 décrit les caractéristiques techniques du préambule de la revendication 1.

### Description de l'invention

L'invention a pour objet un pneumatique tubeless en forme de tore ouvert radialement intérieurement avec une paroi extérieure et une paroi intérieure, caractérisé en ce qu'au moins une partie de la paroi intérieure est recouverte d'une couche auto-obturante comportant un élastomère thermoplastique styrénique (dit « TPS ») et ayant une dureté Shore 0 inférieure à 35.

Avantageusement, la couche auto-obturante présente une dureté Shore 0 inférieure à 20 et encore préférentiellement inférieure à 10.

Avantageusement la couche auto-obturante a un module dynamique G* inférieur à 0,01 MPa ; G* étant mesuré à une fréquence de 10 Hz et une température de 60°C.

Les Demanderesses ont trouvé que contrairement à ce qui est indiqué dans les documents de l'art antérieur, l'utilisation d'une couche auto-obturante très souple comportant un élastomère thermoplastique styrénique est non seulement possible mais donne d'excellents propriétés d'obturation des crevaisons et particulièrement après expulsion ou extraction du clou responsable de la crevaison.

Dans certaines applications, il est avantageux de recouvrir, du côté de la cavité intérieure, la couche auto-obturante par un film. Ce film permet de limiter substantiellement la tendance du matériau de la couche auto-obturante à traverser la paroi du pneumatique après expulsion d'un clou. La présence de ce film autorise l'emploi de matériaux auto-obturants d'une dureté inférieure à celles des matériaux préconisés dans les documents antérieurs sans pénaliser l'efficacité en cas de crevaison. Ce film est de préférence thermoplastique et encore préférentiellement extensible.

Avantageusement, l'épaisseur du film thermoplastique est inférieure à 100 μm et de préférence comprise entre 5 et 50 μm en fonction des types de pneumatiques.

Cette très faible épaisseur du film thermoplastique lui confère une masse négligeable et une très grande souplesse. Un tel film thermoplastique peut être en polypropylène (PP).

Le film thermoplastique extensible peut être choisi dans le groupe des polyéthylène (PE), polychlorure de vinyle (PVC) et polychlorure de vinylidène (PVDC). Les films constitués de ces trois matériaux sont très usuellement utilisés comme films étirables dans des applications professionnelles mais aussi domestiques.

La couche auto-obturante a avantageusement une épaisseur supérieure à 0,3 mm et de préférence comprise entre 0,5 et 10 mm selon les applications. L'épaisseur de cette couche est fonction du type de pneumatique concerné. Pour un véhicule de type poids lourd ou agricole, cette épaisseur peut être comprise entre 2 et 5 mm. Pour des pneumatiques Génie Civil, l'épaisseur peut être comprise entre 2 et 10 mm. Pour des véhicules de tourisme, cette épaisseur peut être comprise entre 0,5 et 4 mm. Enfin pour des pneumatiques pour cycle, l'épaisseur peut être comprise entre 0,4 et 2 mm et préférentiellement autour de 1 mm.

Avantageusement, le TPS est l'élastomère majoritaire de la couche auto-obturante.

Les élastomères TPS ont l'avantage de pouvoir accepter des taux d'huiles d'extension très élevés et ont aussi d'excellentes propriétés d'extensibilité et de résistance à la rupture et ainsi les compositions élastomères résultantes peuvent avoir les propriétés mécaniques adaptées à l'application d'obturation de trous.

Avantageusement, l'élastomère TPS est choisi dans le groupe constitué par les copolymères blocs styrène/ butadiène/ styrène (SBS), styrène/ isoprène/ styrène (SIS), styrène/ isoprène/ butadiène/ styrène (SIBS), styrène/ éthylène/ butylène/ styrène (SEBS), styrène/ éthylène/ propylène/ styrène (SEPS), styrène/ éthylène/ éthylène/propylène/ styrène (SEEPS) et les mélanges de ces copolymères.

De façon préférentielle, l'élastomère TPS est choisi dans le groupe constitué par les copolymères SEBS, les copolymères SEPS et les mélanges de ces copolymères.

Avantageusement, la couche auto-obturante comprend une huile d'extension à un taux supérieur à 200 pce (parties en poids pour cent d'élastomères).

Cette huile d'extension peut être choisie dans le groupe constitué par les huiles polyoléfiniques, les huiles paraffiniques, les huiles naphténiques, les huiles aromatiques, les huiles minérales, et les mélanges de ces huiles.

Préférentiellement, l'huile d'extension est une huile polyisobutylène avec un taux compris entre 500 et 900 pce.

Dans les pneumatiques selon l'invention la couche auto-obturante peut être disposé au niveau de leur sommet, elle peut se prolonger jusqu'aux équateurs, ou d'un flanc à l'autre au moins jusqu'à une position radiale correspondant sensiblement au rebord du crochet de jante lorsque le pneumatique est en position montée. L'étendue de la couche auto-obturante ou du stratifié auto-obturant composé de la couche auto-obturante et du film thermoplastique extensible est fonction des risques de crevaison des pneumatiques concernés mais aussi du compromis entre ces risques et le poids de ces pneumatiques.

L'invention a aussi pour objet un procédé d'application d'un stratifié auto-obturant sur la paroi intérieure d'un pneumatique tubeless pour cycle dans lequel :

- on retourne le pneumatique pour amener la paroi intérieure à l'extérieur du tore et la paroi extérieure à l'intérieur du tore ;
- on met en extension la paroi extérieure du tore du pneumatique ;
- on applique les moyens auto-obturants sur la paroi intérieure du pneumatique ; et
- on retourne le pneumatique pour ramener les parois intérieure et extérieure dans leurs positions initiales.

La couche auto-obturante se trouve ainsi d'une manière très avantageuse dans un état de contraintes de compression qui contribue au fonctionnement auto-obturant.

D'autres caractéristiques et avantages de l'invention ressortent de la description faite ci-après en référence aux dessins annexés qui montrent, à titre d'exemples non limitatifs, des formes de réalisation de l'objet de l'invention.

**Description brève des dessins**

Tous les détails de réalisation sont donnés dans la description qui suit, complétée par les figures 1 à 14, dans lesquelles :

- la figure 1 présente de manière schématique une coupe radiale d'un pneumatique incorporant une couche auto-obturante conforme à l'invention ;
- la figure 2 présente une coupe radiale partielle d'un pneumatique pour cycle incorporant un stratifié auto-obturant selon l'invention ;
- les figures 3 et 4 présentent de manière schématique les mécanismes d'obturation des couches auto-obturantes conformes à l'invention en présence d'un objet perforant et après son retrait ;
- les figures 5 et 6 présentent de manière schématique les mécanismes d'obturation des stratifiés auto-obturants conformes à l'invention après le retrait d'un objet perforant ou clou ;
- la figure 7 présente la première étape d'application d'une couche auto-obturante sur un pneumatique pour cycle ;
- la figure 8 illustre un pneumatique pour cycle après retournement ;
- la figure 9 illustre un pneumatique pour cycle retourné et placé sur un tambour de gonflage ;
- la figure 10 présente la phase de gonflage du pneumatique retourné ;
- la figure 11 présente le pneumatique pour cycle retourné et gonflé ;
- la figure 12 présente la pose de la couche auto-obturante ;
- la figure 13 présente la remise à l'endroit du pneumatique de la figure 12 ; et
- la figure 14 présente le pneumatique de la figure 13 remis à l'endroit.

**Description détaillée de l'invention**

Les valeurs de dureté Shore 0 sont obtenues en accord avec la norme ASTM D 2240. Les mesures sont effectuées 10 secondes après l'application de l'indenteur.

Les caractérisations dynamiques des matériaux élastomères sont réalisées avec un rhéomètre RPA 2000 de la société Alpha Technologies. Les échantillons sont disposés dans une chambre entre deux plateaux biconiques striés. Après fermeture, le volume de la chambre est de l'ordre de 4,5 cm³. L'un des plateaux est fixe, l'autre oscillant de façon sinusoïdale autour de son centr. On impose une déformation de l'ordre de 20 % et on effectue un balayage en fréquence entre 0,03 Hz à 33 HZ. La température imposée à l'intérieur de la chambre est de 60°C. Les résultats exploités sont le module de cisaillement dynamique G* et le facteur de perte tg δ. On a :

$$G* = \sqrt{G'^2 + G''^2} \text{ et } tg\delta = \frac{G''}{G'}$$

G* : module de cisaillement dynamique en MPa ;
G' : module réel de cisaillement en MPa ;
G" : module de perte en MPa ; et
δ : déphasage entre la déformation imposée et la contrainte mesurée.

Le module dynamique et la dureté Shore 0 sont deux méthodes de caractérisation mécanique des matériaux élastomères. Leurs résultats sont corrélés mais ne sont pas identiques notamment pour des matériaux de très faible rigidité. Ces deux méthodes sont particulièrement bien adaptées pour la caractérisation de matériaux de très faible rigidité tels que ceux des couches auto-obturantes décrites dans ce document.

On entend par module d'extension d'un matériau le module d'extension sécant apparent obtenu à une déformation d'extension uni axiale donnée ε, en première élongation (soit sans cycle d'accommodation), mesuré à 23°C ; la vitesse de traverse est de 500 mm.min⁻¹ (norme ASTM D412). On appelle ce module le module E.

$$E = \frac{\sigma}{\varepsilon} = \frac{F}{S_0 \varepsilon}$$ ; avec $S_0$ section initiale de l'éprouvette, F force d'extension mesurée à la déformation considérée et σ = F/S₀ contrainte d'extension à la déformation considérée rapportée à la section initiale de l'éprouvette S₀.

On entend par $\sigma_R$ et $\varepsilon_R$ les contraintes et allongements mesurés à la rupture des éprouvettes de matériaux ($\sigma_R$ est rapporté à la section initiale de l'éprouvette $S_0$).

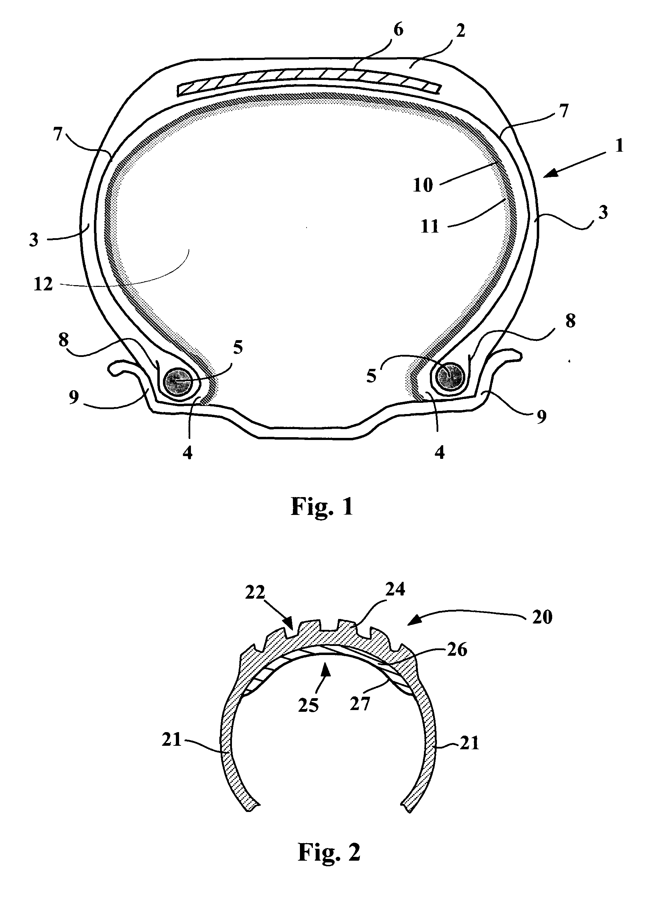

La figure 1 représente de manière schématique une coupe radiale d'un bandage pneumatique ou pneumatique pour véhicule de tourisme incorporant une couche auto-obturante conforme à l'invention.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits « radiaux », par exemple textiles ou métalliques, c'est-à-dire que ces câbles sont disposés pratiquement parallèles les uns aux autres et s'étendent d'un bourrelet à l'autre de manière à former un angle compris entre 80° et 90° avec l'axe de rotation du pneumatique. Une couche étanche 10 s'étend d'un bourrelet à l'autre radialement intérieurement relativement à l'armature de carcasse 7.

Le pneumatique 1 est caractérisé en ce que sa paroi intérieure comporte une couche auto-obturante 11. Conformément à un mode de réalisation de l'invention, la couche auto-obturante 11 recouvre l'ensemble de la couche étanche 10 et constitue substantiellement toute la paroi intérieure du pneumatique. La couche auto-obturante peut aussi se prolonger d'un flanc à l'autre, au moins à partir d'une hauteur radiale correspondant aux rebords des crochets de jante lorsque le bandage pneumatique est en position montée. Selon d'autres modes de réalisation préférentiels, la couche auto-obturante 11 pourrait recouvrir uniquement une partie de la couche étanche à l'air (couche 10), par exemple seulement la zone sommet du pneumatique ou s'étendre au moins de la zone sommet jusqu'à mi-flancs (équateurs) du pneumatique.

La couche étanche (d'épaisseur 0,7 à 0,8 mm) est à base de caoutchouc butyl, présente une formulation conventionnelle pour une « gomme intérieure » (*"inner liner "*) qui définit usuellement, dans un pneumatique conventionnel, la face radialement intérieure du bandage destinée à protéger l'armature de carcasse de la diffusion d'air provenant de l'espace intérieur au pneumatique. Cette couche 10 étanche à l'air permet donc le gonflement et le maintien sous pression du pneumatique 1 ; ses propriétés d'étanchéité lui permettent de garantir un taux de perte de pression relativement faible, permettant de maintenir le bandage gonflé, en état de fonctionnement normal, pendant une durée suffisante, normalement de plusieurs semaines ou plusieurs mois.

La figure 2 illustre un pneumatique pour cycle comportant un stratifié auto-obturant selon l'invention.

Ce pneumatique 20 comprend deux flancs 21 et un sommet 22. Une armature de carcasse (non représentée) s'étend d'un bourrelet à l'autre dans les flancs et le sommet. Une chappe 24 est disposée sur l'armature de carcasse au niveau du sommet. Ce pneumatique comprend un stratifié auto-obturant 25 selon l'invention. Ce stratifié 25 est constitué d'une couche auto-obturante 26 similaire à celle du pneumatique 1 recouvert par un film thermoplastique extensible 27. Le film thermoplastique extensible est en contact avec l'air de la cavité intérieure du pneumatique. Le stratifié 25 s'étend sensiblement uniquement au niveau du sommet 22 du pneumatique 20.

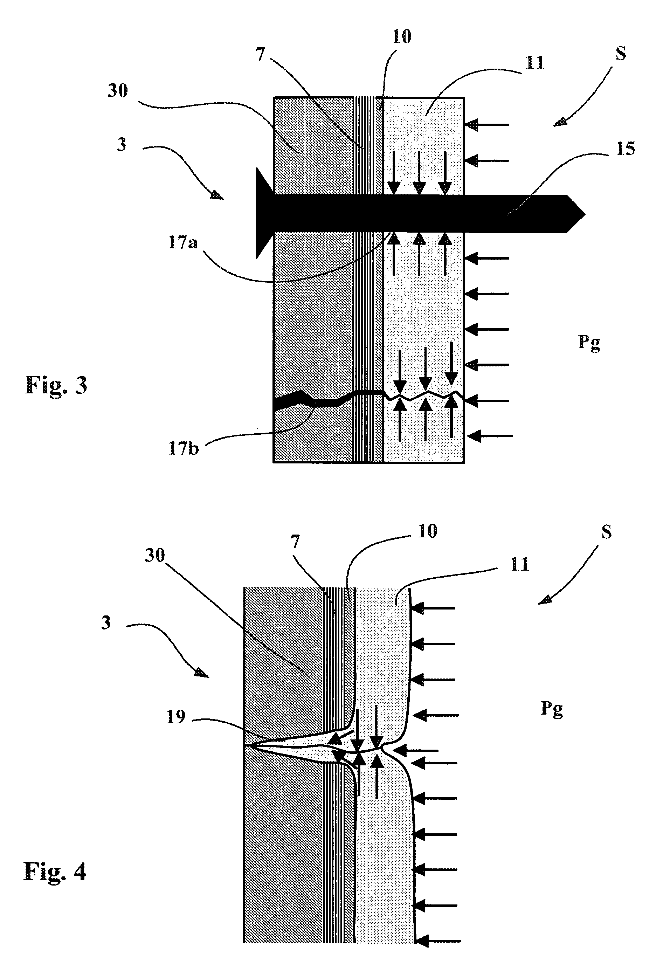

Les figures 3 et 4 illustrent de manière très schématique les mécanismes d'obturation des couches auto-obturantes conformes à l'invention en présence d'un objet perforant et après son retrait. Ces deux figures présentent une portion agrandie d'une portion S d'un flanc 3 du pneumatique 1.

A la figure 3, un objet perforant 15 a traversé complètement le flanc 3 du pneumatique en créant la fissure 17a. L'objet perforant ou clou est resté en place et les flèches indiquent le sens des contraintes créées par la pression de gonflage Pg qui règne à l'intérieur de la cavité intérieure 12 du pneumatique 1. Cette pression de gonflage Pg met la couche auto obturante dans un état de compression hydrostatique d'autant plus parfaite que son module d'élasticité d'extension ou son module dynamique de cisaillement sont faibles. Ces efforts appliquent le matériau de la couche auto-obturante contre l'objet perforant 15 et assurent l'étanchéité de la fissure 17a.

A la même figure 3, on voit la fissure 17b après retrait du clou 15 lorsque les deux lèvres de la fissure dans le matériau 30 du flanc 3 et les autres couches de matériaux sont très proches. En pareil cas, les mêmes efforts de compression hydrostatique assurent la fermeture des lèvres de la fissure 17b dans la couche auto-obturante et ainsi l'étanchéité de cette fissure 17b.

Il est à noter que lorsque le clou reste en place, la couche étanche 10 permet de limiter très fortement le débit de fuite à travers la fissure 17a. En revanche, lors du retrait du clou, cette couche étanche est absolument incapable d'obturer la fissure 17b et la mise à plat est souvent pratiquement instantanée.

La figure 4 présente le cas où, après le retrait de l'objet perforant, les lèvres de la fissure créée dans la structure du flanc 3 du pneumatique sont écartées notablement et laissent un véritable trou de dimension finie. Un tel trou peut couramment atteindre plusieurs mm de diamètre. Dans ce cas, le moteur de l'obturation d'une telle fissure 17b est toujours la pression hydrostatique engendrée dans la couche auto-obturante par la pression de gonflage Pg. Ces efforts entraînent un déplacement dans la fissure pour la combler du matériau de la couche auto-obturante proche de la fissure. Il en résulte une excellente obturation de la fissure.

Ce déplacement est d'autant plus aisé que le module dynamique et/ou la dureté Shore 0 du matériau de la couche auto-obturante sont plus faibles. Ces déplacements demandent aussi aux matériaux de la couche auto-obturante un allongement rupture élevé associé à une contrainte rupture élevée pour pouvoir combler les fissures sans se rompre. Un allongement rupture supérieur à 500 % et préférentiellement supérieur à 800 % associé à une contrainte rupture supérieure à 0,2 MPa pour les matériaux conformes à l'invention sont satisfaisants.

Les couches auto-obturantes conforme à l'invention ont un comportement mécanique très proche d'un matériau élastique. Ce comportement leur donne un avantage substantiel vis-à-vis des couches auto-obturantes usuelles dont le comportement mécanique est beaucoup plus visqueux. Cet avantage est mis en évidence lors du retrait des objets perforants, notamment lorsque cet objet perforant est resté en place quelques heures voire quelques jours et plus. Dans un tel cas, le matériau de la couche auto-obturante usuelle a eu largement le temps de se relaxer complètement tout autour de l'objet perforant et sa viscosité s'oppose aux efforts de compression hydrostatique qui tendent à faire fluer le matériau dans la fissure créée par le retrait. Il peut en résulter, notamment si son collant à l'objet perforant a diminué, un défaut d'étanchéité pendant un temps plus ou moins long. Ce défaut d'étanchéité est très facilement audible lors du retrait de l'objet perforant.

En revanche les couches auto-obturantes conforme à l'invention ont un comportement pratiquement purement élastique et lors du retrait, sous l'action des efforts de compression hydrostatique, leur réponse est quasiment instantanée. On n'observe plus ce défaut d'étanchéité.

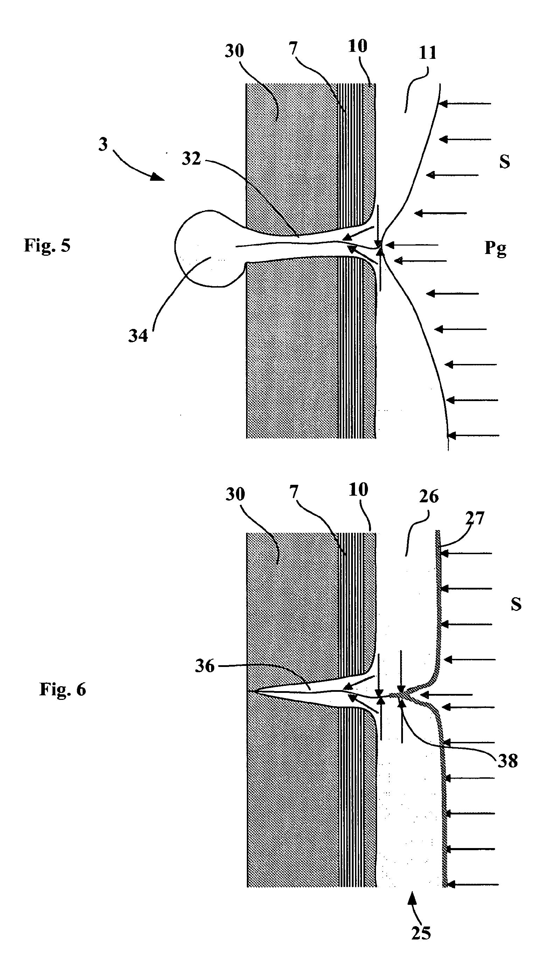

Les figures 5 et 6 illustrent de façon très schématique les mécanismes d'obturation des couche et stratifié auto-obturants conformes à l'invention après le retrait d'un objet perforant. Ces deux figures présentent à nouveau une portion agrandie d'une portion S d'un flanc 3 d'un pneumatique similaire à celui de la figure 1.

La figure 5 illustre le mécanisme de formation d'un bouchon 34 lors du retrait d'un objet perforant en l'absence de film thermoplastique extensible. La fissure 32 est d'une taille telle que le matériau de la couche auto-obturante 11, poussé par la pression de gonflage Pg, traverse toute la paroi du flanc 3 pour former une saillie ou bouchon à l'extérieur. Ce bouchon obture usuellement de façon satisfaisante la fuite mais il est très exposé à l'extérieur du pneumatique et son arrachement est susceptible d'entraîner une mise à plat progressive ou instantanée du pneumatique. Une autre conséquence de la formation d'un bouchon est de diminuer la quantité de matériau de la couche auto-obturante à l'intérieur du pneumatique, cela nuit à l'efficacité de cette couche.

La figure 6 illustre le cas où un film thermoplastique extensible 27 est placé à la surface extérieure de la couche auto-obturante 26 pour former un stratifié auto-obturant selon l'invention. Dans ce cas, la présence du film thermoplastique 27 renforce mécaniquement la couche auto-obturante et favorise le confinement du matériau auto-obturant à l'intérieur de la paroi 3 de la portion S du pneumatique. La fissure 36 n'est pas traversée complètement par le matériau de la couche auto-obturante 26 et il n'y a pas de formation d'un bouchon à l'extérieur. Selon les applications, les types de films thermoplastique extensibles peuvent varier et notamment leurs épaisseurs. Il est à noter que le film thermoplastique est de préférence extensible ou étirable avec une très faible épaisseur donc une rigidité en extension elle aussi très faible. C'est ce qui permet leur remarquable succès dans toutes leurs applications domestiques. Cette très faible rigidité en extension leur permet d'envelopper l'objet perforant sans diminuer l'efficacité de la couche auto-obturante et de s'allonger fortement sans retrait. En conséquence, lors de l'expulsion de l'objet perforant, le film thermoplastique extensible 27 a tendance à venir à l'intérieur de la fissure 36 et ainsi à renforcer mécaniquement de façon substantielle le matériau de la couche auto-obturante 26. On voit cette pénétration de façon schématique dans la zone 38. On observe ainsi une véritable synergie entre les deux composants du stratifié selon l'invention.

Le film thermoplastique a aussi l'avantage de protéger la surface extérieure des poussières. Dans le cas des pneumatiques pour cycle, ce film permet de plier le pneumatique de façon usuelle sans aucun problème.

Les élastomères thermoplastiques styréniques (en abrégé « TPS ») sont des élastomères thermoplastiques se présentant sous la forme de copolymères blocs à base de styrène.

De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylène/butylène). Ce sont souvent des élastomères triblocs avec deux segments rigides reliés par un segment souple. Les segments rigides et souples peuvent être disposés linéairement, en étoile ou branchés.

De préférence, la couche auto-obturante selon l'invention comprend un l'élastomère TPS choisi dans le groupe constitué par les copolymères blocs styrène/butadiène/ styrène (SBS), styrène/ isoprène/ styrène (SIS), styrène/ isoprène/ butadiène/styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

Plus préférentiellement, ledit élastomère est choisi dans le groupe constitué par les copolymères SEBS, les copolymères SEPS et les mélanges de ces copolymères.

Selon un autre mode de réalisation préférentiel de l'invention, le taux de styrène, dans l'élastomère TPS, est compris entre 5 et 50 %.

En dessous du minimum indiqué, le caractère thermoplastique de l'élastomère risque de diminuer de manière sensible tandis qu'au-dessus du maximum préconisé, l'élasticité de la composition peut être affectée. Pour ces raisons, le taux de styrène est plus préférentiellement compris entre 10 et 40%, en particulier entre 15 et 35%.

On préfère que la température de transition vitreuse (Tg, mesurée selon ASTM D3418) de l'élastomère TPS soit inférieure à -20°C, plus préférentiellement inférieure à -40°C.

Une valeur de Tg supérieure à ces minima, impliquant une Tg plus élevée de la composition auto-obturante elle-même, peut diminuer les performances de la composition auto-obturante lors d'une utilisation à très basse température ; pour une telle utilisation, la Tg de l'élastomère TPS est plus préférentiellement encore inférieure à -50°C.

La masse moléculaire moyenne en nombre (notée Mn) de l'élastomère TPS est préférentiellement comprise entre 50 000 et 500 000 g/mol, plus préférentiellement comprise entre 75 000 et 450 000. En dessous des minima indiqués, la cohésion entre les chaînes d'élastomère TPS, en raison de sa dilution (quantité d'agent d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la souplesse de la composition, aux taux d'huile d'extension préconisés. Ainsi, on a constaté qu'une valeur comprise dans un domaine de 250 000 à 400 000 était particulièrement bien adaptée, notamment à une utilisation de la composition auto-obturante dans un bandage pneumatique.

La masse moléculaire moyenne en nombre (Mn) de l'élastomère TPS est déterminée de manière connue, par chromatographie d'exclusion stérique (SEC). L'échantillon est préalablement solubilisé dans du tétrahydrofuranne à une concentration d'environ 1 g/ l ; puis la solution est filtrée sur filtre de porosité 0,45 $\mu$m avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 $\mu$l. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'élastomère TPS peut constituer la totalité de la matrice élastomère ou la majorité pondérale (de préférence pour plus de 50 %, plus préférentiellement pour plus de 70%) de cette dernière lorsqu'elle comporte un ou plusieurs autre(s) élastomère(s), thermoplastiques ou non, par exemple du type diéniques.

Selon un mode de réalisation préférentiel, l'élastomère TPS est le seul élastomère, et le seul élastomère thermoplastique présent dans la composition auto-obturante.

Pour obtenir des modules dynamiques et/ou des duretés Shore conformes à l'invention, les couches auto-obturantes comportent préférentiellement des huiles d'extension (ou huiles plastifiantes), utilisées à un taux très élevé, supérieur à 200 pce (soit supérieur à 200 parties en poids pour cent parties d'élastomère).

On peut utiliser toute huile d'extension, de préférence à caractère faiblement polaire, apte à étendre, plastifier des élastomères, notamment thermoplastiques.

A température ambiante (23°C), ces huiles, plus ou moins visqueuses, sont des liquides (c'est-à-dire, pour rappel, des substances ayant la capacité de prendre à terme la forme de leur contenant), par opposition notamment à des résines, en particulier tackifiantes, qui sont par nature solides.

De préférence, l'huile d'extension choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

Plus préférentiellement, on utilise une huile polyisobutène, notamment polyisobutylène (PIB), une huile paraffinique ou un mélange de ces huiles.

A titre d'exemples, des huiles polyisobutylène sont commercialisées notamment par la société Univar sous la dénomination "Dynapak Poly" (e.g. "Dynapak Poly 190"), par BASF sous les dénominations "Glissopal" (e.g. "Glissopal 1000") ou "Oppanol" (e.g. "Oppanol B12") ; des huiles paraffiniques sont commercialisées par exemple par Exxon sous la dénomination "Telura 618" ou par Repsol sous la dénomination "Extensol 51".

La masse moléculaire moyenne en nombre (Mn) de l'huile d'extension est préférentiellement comprise entre 200 et 30 000 g/mol, plus préférentiellement encore comprise entre 300 et 10 000 g/mol.

Pour des masses Mn trop basses, il existe un risque de migration de l'huile à l'extérieur de la composition auto-obturante, tandis que des masses trop élevées peuvent entraîner une rigidification excessive de cette composition. Une masse Mn comprise entre 400 et 3000 g/mol s'est avérée constituer un excellent compromis pour les applications visées, en particulier pour une utilisation dans un bandage pneumatique.

La masse moléculaire moyenne en nombre (Mn) de l'huile d'extension est déterminée par SEC, l'échantillon étant préalablement solubilisé dans du tétrahydrofuranne à une concentration d'environ 1 g/l ; puis la solution est filtrée sur filtre de porosité 0,45 $\mu$m avant injection. L'appareillage est la chaîne chromatographique "WATERS alliance". Le solvant d'élution est le tétrahydrofuranne, le débit de 1 ml/min, la température du système de 35°C et la durée d'analyse de 30 min. On utilise un jeu de deux colonnes "WATERS" de dénomination "STYRAGEL HT6E". Le volume injecté de la solution de l'échantillon de polymère est de 100 $\mu$l. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'homme du métier saura, à la lumière de la description et des exemples de réalisation qui suivent, ajuster la quantité d'huile d'extension en fonction des conditions particulières d'usage de la couche auto-obturante, notamment du type de pneumatique dans lequel elle est destinée à être utilisée.

On préfère que le taux d'huile d'extension soit compris entre 500 et 900 pce. En dessous du minimum indiqué, la composition auto-obturante risque de présenter une rigidité trop forte pour certaines applications tandis qu'au-delà du maximum préconisé, on s'expose à un risque de cohésion insuffisante de la composition.

Des élastomères TPS tels que SEPS ou SEBS étendus avec de forts taux d'huiles sont bien connus et sont disponibles commercialement. A titre d'exemples, on peut citer les produits commercialisés par la société Vita Thermoplastic Elastomers ou VTC (« VTC TPE group »), sous la dénomination « Dryflex » (e.g. « Dryflex 967100 ») ou « Mediprene » (e.g. « Mediprene 500 000M ») et ceux vendus par Multibase sous dénomination « Multiflex » (e.g. « Multiflex G00 »).

Ces produits, développés notamment pour des applications médicales, pharmaceutiques ou cosmétiques, peuvent être mis en oeuvre de façon classique pour des TPE, par extrusion ou moulage, par exemple à partir d'une matière première disponible sous la forme de billes ou de granulés.

Le pneumatiques 1 de la figure 1 pourvu de sa couche auto-obturante 11 tel que décrite ci-dessus peut être réalisé avant vulcanisation ou après.

Dans le premier cas (i.e., avant vulcanisation du pneumatique), la composition auto-obturante est simplement appliquée de façon conventionnelle à l'endroit souhaité, pour formation de la couche 11. La vulcanisation est ensuite effectuée classiquement. Les élastomères TPS supportent bien les contraintes liées à l'étape de vulcanisation.

Une variante de fabrication avantageuse, pour l'homme du métier des pneumatiques, consistera par exemple à déposer à plat la couche auto-obturante directement sur un tambour de confection, sous la forme d'une couche ("*skim*") d'épaisseur adaptée (par exemple 3 mm), avant de recouvrir cette dernière avec la couche étanche à l'air puis le reste de la structure du pneumatique.

Dans le second cas (i.e., après vulcanisation du pneumatique), la couche auto-obturante est appliquée à l'intérieur du bandage pneumatique cuit par tout moyen approprié, par exemple par collage, par pulvérisation ou encore extrusion ou soufflage d'un film d'épaisseur appropriée. Le fait d'appliquer à chaud le produit auto-obturant a l'avantage de d'améliorer la tenue de la liaison entre la couche auto-obturante et la paroi intérieure du pneumatique. On peut effectuer ou non un nettoyage de cette paroi intérieure selon le cas.

Si nécessaire on peut appliquer le film thermoplastique sur la couche auto-obturante après vulcanisation lorsque le film a une température de ramollissement trop faible pour supporter la vulcanisation. La très grande souplesse du film et son extensibilité rendent cette application aisée. De plus ces films peuvent avoir un collant (ou « tack ») qui facilite encore cette application.

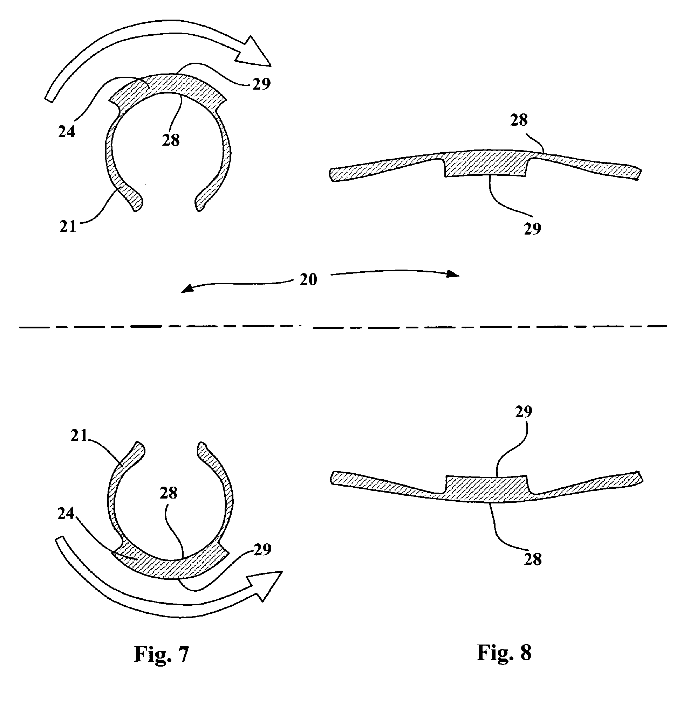

L'application d'un stratifié auto-obturant selon l'invention sur la paroi intérieure d'un pneumatique pour cycle est maintenant décrite en liaison avec les figures 7 à 14. Comme souligné dans le brevet cité US 4,424,295, il est très difficile de déposer après vulcanisation une couche de produit auto-obturant à l'intérieur d'un pneumatique pour cycle en raison de la très grande souplesse de ce type de pneumatique. Le procédé selon l'invention permet de réaliser aisément une telle application.

La figure 7 illustre la première étape du procédé d'application selon l'invention d'un stratifié auto-obturant sur un pneumatique pour cycle. Ce pneumatique 20 comprend notamment deux flancs 21, une chappe 24 et présente une paroi intérieure 28 et une paroi extérieure 29. La première étape consiste à retourner ce pneu de telle sorte que la paroi intérieure 28 se retrouve à l'extérieur du pneumatique et que la paroi extérieure 29 à l'intérieur. Le retournement peut s'effectuer dans le sens indiqué par les flèches de la figure 7.

Ce retournement est très facile pour un pneumatique pour cycle en raison de la très grande souplesse des tringles qui peuvent aisément être pliées... Ce retournement peut être fait manuellement.

La figure 8 présente le pneumatique 20 retourné.

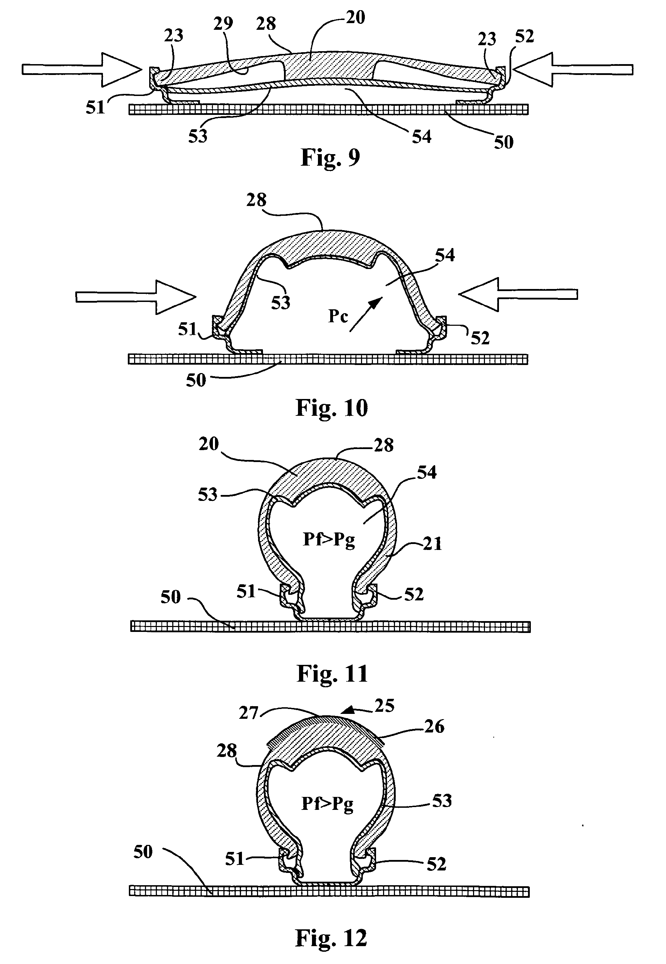

On place ensuite le pneumatique 20 retourné sur un tambour de gonflage 50 schématiquement illustré (figure 9) et comportant deux flasques 51 et 52 adaptés pour recevoir les bourrelets 23 du pneumatique et une membrane 53 destinée à assurer l'étanchéité de la cavité 54 formée par le tambour, les flasques et la membrane.

On gonfle ensuite la cavité 54 tout en rapprochant les deux flasques 51 et 52 l'un vers l'autre tel qu'illustré à la figure 10. La pression intérieure Pc de la cavité 54 plaque la membrane 53 contre la paroi extérieure 29 du pneumatique. Les deux flèches de la figure 10 montrent la direction du mouvement de rapprochement des deux flasques 51,52.

A la figure 11, le mouvement de rapprochement des deux flasques 51 et 52 est achevé et la pression intérieure dans la cavité 54 est portée à une valeur Pf. Cette pression Pf est comprise entre 0,5 et 3 fois la pression nominale de gonflage du pneumatique Pg. De préférence cette pression est fortement supérieure à la pression nominale de gonflage du pneumatique 20 pour amener l'armature de carcasse du pneumatique 20 à un état d'extension supérieur à celui normalement subi en service par le pneumatique.

Cette pression de gonflage Pf a aussi l'avantage de donner au pneumatique 20 ainsi monté à l'envers une rigidité d'ensemble tout à fait suffisante pour pouvoir appliquer sur la paroi intérieure 28 le stratifié auto-obturant 25.

Juste avant la pose du stratifié 25, il est possible de réaliser un nettoyage du pneumatique. Ce nettoyage peut être un simple dépoussiérage par brossage, ou utiliser de l'eau de l'alcool ou tout autre produit et méthode appropriés.

La figure 12 présente le pneumatique 20 comportant un stratifié 25 déposé sur sa paroi intérieure 28. Ce stratifié peut avoir été réalisé antérieurement par extrusion d'un skim aux largeur et épaisseur voulues et dépôt sur un film de protection, par exemple siliconé, et enroulement en bobines. Lors de l'application sur le pneumatique, on enroule une couche du skim autour du pneumatique en décollant lors de l'application le skim du film siliconé de protection et en mettant en rotation le pneumatique. On effectue ensuite l'application du film thermoplastique 27.

De préférence, le film thermoplastique 27 est appliqué sur la paroi libre du skim avant enroulement de sorte qu'on enroule une bobine de stratifié prêt à l'application sur le pneumatique 20 et cette application s'effectue en une seule opération.

On peut aussi appliquer la couche auto-obturante par enroulement d'une bandelette d'épaisseur et de largeur inférieures aux dimensions voulues.

On peut enfin extruder directement le matériau auto-obturant 26 sur la paroi intérieure 28 du pneumatique et enrouler le film thermoplastique 27 ensuite.

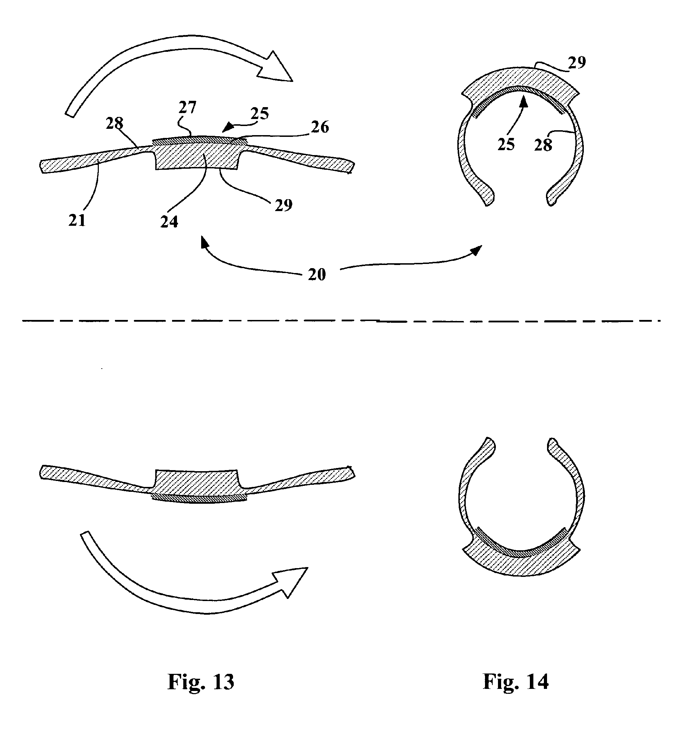

Après la pose du stratifié 25, on remet le pneumatique à l'endroit par un second retournement tel qu'illustré à la figure 13. On obtient alors le pneumatique illustré à la figure 14.

Il est à noter que la couche auto-obturante 26 du stratifié 25, posée sans contraintes particulières sur la paroi intérieure 28 du pneumatique retourné, gonflé à Pf, se retrouve après le retournement dans un état de compression lié à la reprise de la forme normale du pneumatique 20 et au dégonflement de la cavité 54. Cet état de compression doit se maintenir lorsque le pneumatique 20 est gonflé à sa pression nominale de gonflage puisque l'application a eu lieu avec une pression dans la cavité 54 supérieure à cette pression nominale de gonflage Pg. Cet état de compression est très favorable à l'efficacité de la couche auto obturante 26 et du stratifié auto-obturant 25. Lorsque la pression nominale de gonflage Pg est de 2 bars, la pression appliquée peut atteindre 6 bars.

Un exemple de réalisation de l'invention a été effectué pour des pneumatiques pour cycle de dimension 52-559. Sur la paroi intérieure de ces pneumatiques a été déposé une couche de 1 mm d'épaisseur du matériau auto-obturant constitué par une matrice élastomérique de SEBS (15 % du produit Kraton G1654) et d'une huile de polyisobutylène (PIB) de Mn=1000 (85% de Dynapack 190). Un film étirable de polyéthylène de 35 $\mu$m d'épaisseur a aussi été appliqué. Le poids du stratifié est de l'ordre de 100 g. La dureté Shore 0 de ce matériau est de l'ordre de 8. Son module dynamique G* est inférieur à 10 000 Pa à 60°C.

Ces pneumatiques ont été perforés avec des clous de 1,8 mm de diamètre, d'autres pointes diverses et des objets provoquant des blessures (exemple des mèches de perceuse de 2 mm de diamètre). On a réalisé le suivi de la pression pendant 5 jours. Nous avons constaté une fuite nulle pour 3 perforations avec les clous de 1,8 mm (c'est-à-dire, une baisse de pression équivalente à celle du pneumatique avant perforation). Les fuites produites pour les autres objets sont faibles et compatibles avec une utilisation de type vélo ou cycle.

L'invention n'est pas limitée aux exemples décrits et représentés et diverses modifications peuvent y être apportées sans sortir de son cadre défini par les revendications annexées.

**Revendications**

1. Pneumatique tubeless (1,20) en forme de tore ouvert radialement intérieurement avec une paroi extérieure (29) et une paroi intérieure, (28) au moins une partie de la paroi intérieure étant recouverte d'une couche auto-obturante (11,26) comportant un élastomère thermoplastique styrénique (dit « TPS »), **caractérisé en ce que** la dureté Shore 0 de la couche auto- obturante est inférieure à 35.

2. Pneumatique (1,20) selon la revendication 1, dans lequel la dureté Shore 0 de la couche auto-obturante (11,26) est inférieure à 20 et préférentiellement inférieure à 10.

3. Pneumatique (1,20) selon l'une des revendications 1 et 2,dans lequel Pa couche auto-obturante a un module dynamique G* inférieur à 0,01 MPa ; G* étant mesuré à une fréquence de 10 Hz et une température de 60°C.

4. Pneumatique (1,20) selon l'une des revendications 1 à 3 dans lequel la couche auto-obturante (11,26) est recouverte, du côté de la cavité intérieure (12) du pneumatique, par un film. (27)

5. Pneumatique (1,20) selon la revendication 4 dans lequel le film (27) est un film thermoplastique extensible choisi dans le groupe des polyéthylène (PE), polychlorure de vinyle (PVC) et polychlorure de vinylidène (PVDC)..

6. Pneumatique (1,20) selon l'une quelconque des revendications précédentes, dans lequel le TPS est l'élastomère majoritaire de la couche auto-obturante. (10,26)

7. Pneumatique (1,20) selon l'une quelconque des revendications précédentes, dans lequel l'élastomère TPS est choisi dans le groupe constitué par les copolymères blocs styrène/butadiène/ styrène (SBS), styrène/ isoprène/ styrène (SIS), styrène/ isoprène/ butadiène/styrène (SIBS), styrène/ éthylène/ butylène/ styrène (SEBS), styrène/ éthylène/propylène/ styrène (SEPS), styrène/ éthylène/ éthylène/ propylène/ styrène (SEEPS) et les mélanges de ces copolymères.

8. Pneumatique (1,20) selon la revendication 7, dans lequel l'élastomère TPS est choisi dans le groupe constitué par les copolymères SEBS, les copolymères SEPS et les mélanges de ces copolymères.

9. Pneumatique (1,20) selon l'une quelconque des revendications précédentes, dans lequel la couche auto-obturante (10,26) comprend une huile d'extension à un taux supérieur à 200 pce (parties en poids pour cent d'élastomère).

10. Pneumatique (1,20) selon l'une quelconque des revendications précédentes, comprenant par ailleurs une couche d'étanchéité constituée (10) d'une composition de caoutchouc sensiblement étanche au gaz de gonflage couvrant substantiellement toute la paroi intérieure (28) dudit pneumatique, dans lequel dans lequel la couche auto-obturante (11,26) recouvre, au moins en partie, la couche d'étanchéité (10) du côté de la cavité intérieure (12) du pneumatique.

11. Pneumatique (1,20) selon l'une quelconque des revendications précédentes, dans lequel la couche auto-obturante (11,26) est disposée au niveau du sommet dudit pneumatique.

12. Pneumatique (20) selon l'une quelconque des revendications précédentes, tel qu'il est 12. Pneumatique selon l'une quelconque des revendications précédentes, tel qu'il est adapté pour un cycle.

13. Pneumatique (20) selon la revendication 12, dans lequel l'épaisseur de la couche auto-obturante (26) est comprise entre 0,6 et 1,5 mm et préférentiellement entre 0,8 et 1,2 mm

14. Procédé d'application d'un stratifié auto-obturant (25) sur la paroi intérieure d'un pneumatique (20) pour cycle selon l'une des revendications 12 et 13, dans lequel :

   - on retourne le pneumatique (20) pour amener la paroi intérieure (28) a l'extérieur du tore et la paroi extérieure (29) à l'intérieur du tore
   - on met en extension la paroi extérieure (29) du tore du pneumatique ;
   - on applique les moyens auto-obturants (25) sur la paroi intérieure (28) du pneumatique ; et
   - on retourne le pneumatique pour ramener les parois intérieure (29) et extérieure dans (29) leurs positions initiales.

15. Procédé selon la revendication 14, dans lequel la mise en extension est produite par une pression intérieure.

**16.** Procédé selon la revendication 15, dans lequel, le pneumatique (20) ayant une pression nominale de gonflage donnée, la pression intérieure est comprise entre 0,5 et 3 fois ladite pression nominale.

**Claims**

**1.** Tubeless tyre (1, 20) in the form of a torus open radially inwards with an outer wall (29) and an inner wall (28), at least part of the inner wall being covered with a self-sealing layer (11, 26) comprising a thermoplastic styrene (TPS) elastomer, **characterized in that** the self-sealing layer has a Shore 0 hardness of less than 35.

**2.** Tyre (1, 20) according to Claim 1, in which the Shore 0 hardness of the self-sealing layer (11, 26) is less than 20 and preferably less than 10.

**3.** Tubeless tyre (1, 20) according to one of claims 1 and 2, in which the self-sealing layer (11, 26) has a dynamic modulus G* of less than 0.01 MPa, G* being measured at a frequency of 10 Hz and a temperature of 60°C.

**4.** Tyre (1, 20) according to one of Claims 1 to 3 in which the self-sealing layer (11, 26) is covered on the side facing the internal cavity (12) of the tyre with a film (27).

**5.** Tyre (1, 20) according to Claim 4, in which the film (27) is an extensible thermoplastic film chosen from the group comprising polyethylene (PE) film, polyvinyl chloride (PVC) film and polyvinylidene chloride (PVDC) film.

**6.** Tyre (1, 20) according to any one of the preceding claims, in which the TPS is the predominant elastomer of the self-sealing layer.

**7.** Tyre (1, 20) according to any one of the preceding claims, in which the TPS elastomer is chosen from the group consisting of styrene/butadiene/styrene (SBS), styrene/isoprene/styrene (SIS), styrene/isoprene/butadiene/styrene (SIBS), styrene/ethylene-butylene/styrene (SEBS), styrene/ethylene-propylene/styrene (SEPS), styrene/ethylene-ethylene-propylene/styrene (SEEPS) block copolymers and blends of these copolymers.

**8.** Tyre (1, 20) according to Claim 7, in which the TPS elastomer is chosen from the group consisting of SEBS copolymers, SEPS copolymers and blends of these copolymers.

**9.** Tyre (1, 20) according to any one of the preceding claims, in which the self-sealing layer (11, 26) includes an extender oil in an amount of greater than 200 phe (parts by weight per hundred parts of elastomer).

**10.** Tyre (11, 26) according to any one of the preceding claims, which also includes an air-impermeable layer (10) consisting of a rubber composition substantially impermeable to the inflation gas and substantially covering the entire inner wall (28) of said tyre, in which the self-sealing layer (11, 26) at least partly covers the air-impermeable layer (10) on the side facing the internal cavity (12) of the tyre.

**11.** Tyre (1, 20) according to any one of the preceding claims, in which the self-sealing layer (11, 26) is placed at the crown of said tyre.

**12.** Tyre (20) according to any one of the preceding claims, such that it is suitable for a cycle.

**13.** Tyre (20) according to Claim 12, in which the thickness of the self-sealing layer is between 0.6 and 1.5 mm and preferably between 0.8 and 1.2 mm.

**14.** Method of applying a self-sealing laminate (25) to the inner wall (28) of a cycle tyre (20) according to either of Claims 12 and 13, in which:

- the tyre (20) is turned inside-out so as to bring the inner wall (28) to the outside of the torus and the outer wall (29) to the inside of the torus;
- the outer torus wall (29) of the tyre is extended;
- the self-sealing means (25) are applied to the inner wall (28) of the tyre; and
- the tyre is turned inside-out so as to return the inner (28) and outer ((29) walls to their initial positions.

**15.** Method according to Claim 14, in which the extension is produced by an internal pressure.

**16.** Method according to Claim 15, in which, when the tyre (20) has a given nominal inflation pressure, the internal pressure is between 0.5 and 3 times said nominal pressure.

**Patentansprüche**

**1.** Tubeless-Reifen (1, 20) in Form eines radial innen offenen Torus mit einer Außenwand (29) und einer Innenwand (28), wobei mindestens ein Teil der Innenwand mit einer selbstverschließenden Schicht (11, 26) bedeckt ist, die ein thermoplastisches Styrolelastomer («TPS» genannt) aufweist, **dadurch gekennzeichnet, dass** die Shore-0-Härte der selbstverschließenden Schicht unter 35 liegt.

2. Reifen (1, 20) nach Anspruch 1, bei dem die Shore-0-Härte der selbstverschließenden Schicht (11, 26) unter 20 und vorzugsweise unter 10 liegt.

3. Reifen (1, 20) nach einem der Ansprüche 1 und 2, bei dem die selbstverschließende Schicht (11, 26) einen dynamischen Modul G* niedriger als 0,01 MPa hat; wobei G* bei einer Frequenz von 10Hz und einer Temperatur von 60°C gemessen wird.

4. Reifen (1, 20) nach einem der Ansprüche 1 bis 3, bei dem die selbstverschließende Schicht (11, 26) auf der Seite des Innenhohlraums (12) des Reifens von einer Folie (27) bedeckt ist.

5. Reifen (1, 20) nach Anspruch 4, bei dem die Folie (24) eine dehnbare thermoplastische Folie ist, die aus der Gruppe von Polyethylen (PE), Polyvinylchlorid (PVC) und Polyvinylidenchlorid (PVDC) ausgewählt wird.

6. Reifen (1, 20) nach einem der vorhergehenden Ansprüche, bei dem das TPS das Mehrheitselastomer der selbstverschließenden Schicht (10, 26) ist.

7. Reifen (1, 20) nach einem der vorhergehenden Ansprüche, bei dem das Elastomer TPS aus der Gruppe ausgewählt wird, die aus den Blockcopolymeren Styrol/Butadien/Styrol (SBS), Styrol/Isopren/Styrol (SIS), Styrol/Isopren/Butadien/Styrol (SIBS), Styrol/Ethylen/Butylen/Styrol (SEBS), Styrol/Ethylen/Propylen/Styrol (SEPS), Styrol/Ethylen/Ethylen/Propylen/Styrol (SEEPS) und den Mischungen dieser Copolymere besteht.

8. Reifen (1, 20) nach Anspruch 7, bei dem das Elastomer TPS aus der Gruppe ausgewählt wird, die aus den Copolymeren SEBS, den Copolymeren SEPS und den Mischungen dieser Copolymere besteht.

9. Reifen (1, 20) nach einem der vorhergehenden Ansprüche, bei dem die selbstverschließende Schicht (11, 26) ein Dehnungsöl in einer Rate von mehr als 200 pce (Gewichtsanteile in Prozent von Elastomer) enthält.

10. Reifen (1, 20) nach einem der vorhergehenden Ansprüche, der weiter eine Dichtungsschicht (10) enthält, die aus einer Zusammensetzung von im Wesentlichen gegenüber dem Füllgas dichtem Kautschuk besteht, die im Wesentlichen die ganze Innenwand (28) des Reifens bedeckt, bei dem die selbstverschließende Schicht (11, 26) zumindest zum Teil die Dichtungsschicht (10) auf der Seite des Innenhohlraums (12) des Reifens bedeckt.

11. Reifen (1, 20) nach einem der vorhergehenden Ansprüche, bei dem die selbstverschließende Schicht (11, 26) im Bereich des Scheitels des Reifens angeordnet ist.

12. Reifen (20) nach einem der vorhergehenden Ansprüche, derart, dass er für ein Fahrrad geeignet ist.

13. Reifen (20) nach Anspruch 12, bei dem die Dicke der selbstverschließenden Schicht (26) zwischen 0,6 und 1,5 mm und vorzugsweise zwischen 0,8 und 1,2 mm liegt.

14. Verfahren zum Aufbringen eines selbstverschließenden Schichtstoffs (25) auf die Innenwand (28) eines Fahrradreifens (20) nach einem der Ansprüche 12 und 13, bei dem:

   - der Reifen (20) umgedreht wird, um die Innenwand (28) zur Außenseite des Torus und die Außenwand (29) zur Innenseite des Torus zu bringen;
   - die Außenwand (29) des Torus des Reifens gedehnt wird;
   - die selbstverschließenden Einrichtungen (25) auf die Innenwand (28) des Reifens aufgebracht werden; und
   - der Reifen umgedreht wird, um die Innenwand (28) und die Außenwand (29) in ihre Anfangsstellungen zurückzubringen.

15. Verfahren nach Anspruch 14, bei dem die Dehnung durch einen Innendruck erzeugt wird.

16. Verfahren nach Anspruch 15, bei dem, wenn der Reifen (20) einen gegebenen Nennfülldruck hat, der Innendruck zwischen dem 0,5-Fachen und dem Dreifachen des Nenndrucks liegt.

**Fig. 1**

**Fig. 2**

Fig. 3

Fig. 4

Fig. 5

Fig. 6

**Fig. 7**

**Fig. 8**

**Fig. 9**

**Fig. 10**

**Fig. 11**

**Fig. 12**

**Fig. 13**                    **Fig. 14**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4426468 A
- EP 1090069 B1
- WO 9962998 A
- US 4424295 A